# EUROPÄISCHE PATENTSCHRIFT

(11) **EP 2 943 934 B1**
(45) Veröffentlichungstag und Bekanntmachung des Hinweises auf die Patenterteilung: **31.10.2018**
(21) Anmeldenummer: 13834321.5
(22) Anmeldetag: 11.11.2013
(51) Int. Cl.: G06T 15/20, G06T 19/00, G06T 7/292, G06T 7/20, G06T 15/00, H04N 5/222

(54) **VERFAHREN ZUR AUFNAHME UND WIEDERGABE EINER ABFOLGE VON EREIGNISSEN**
METHOD FOR RECORDING AND PLAYING BACK A SEQUENCE OF EVENTS
PROCÉDÉ D'ENREGISTREMENT ET DE REPRODUCTION D'UNE SUITE D'ÉVÉNEMENTS

(30) Priorität: 09.11.2012 DE 102012021893
(43) Veröffentlichungstag der Anmeldung: 18.11.2015
(73) Patentinhaber: GoalControl GmbH, 52062 Aachen (DE)
(72) Erfinder: BEAUJEAN, René, 52066 Aachen (DE); LINDNER, Björn, 52070 Aachen (DE); PHILIPPS, Jürgen, 52146 Würselen (DE)
(74) Vertreter: Dammertz, Ulrich
(86) Internationale Anmeldenummer: PCT/DE2013/000670
(87) Internationale Veröffentlichungsnummer: WO 2014/071918

(56) Entgegenhaltungen:
- EP-A2- 1 465 115
- WO-A1-2012/070010
- US-A1- 2008 192 116

## Beschreibung

Die Erfindung betrifft ein Verfahren zur Aufnahme und Wiedergabe einer Abfolge von Ereignissen, nämlich eines Sportereignisses auf einem dreidimensionalen Spielfeld.

Für jegliche Formen von sportlichen Großveranstaltungen, insbesondere Fußballspielen, sind Fernsehübertragungen bekannt, bei denen ein Spielfeld mit einer Vielzahl von Kameras erfasst wird. Entsprechend kann das Spielgeschehen aus einer Vielzahl von verschiedenen Perspektiven für die Zuschauer wiedergegeben werden. Die Auswahl von bestimmten Bildern bzw. Perspektiven des Spielgeschehens liegt jedoch nicht in der Hand bzw. Entscheidung der Zuschauer selbst, sondern wird üblicherweise von der Bildregie der Fernsehanstalten bzw. des Ausrichters solcher Sportveranstaltungen getroffen. Entsprechend sind die Fernsehzuschauer "passiv", und haben keine Entscheidungsmöglichkeit für die Auswahlperspektiven des Spielgeschehens.

Aus dem Stand der Technik sind Kamerasysteme bekannt, welche automatisiert Objekte in den Bilddaten einer jeweiligen Kamera unmittelbar und direkt von einer zugeordneten Auswerteeinheit detektieren, auswerten und zwei-dimensional oder ggf. stereoskopisch in einer 3D-Darstellung aus einer vorbestimmten Perspektive für den Benutzer aufbereiten. Nachteilig bei solchen Kamerasystemen ist, dass insbesondere für die 3D-Aufbereitung des Ereignisses eine pixelbasierte Transformation der Kamerabilder in einen 3D-Raum genutzt wird, und keine 3D-Objekte vom Kamerasystem identifziert werden. Daher erlaubt ein solches Kamerasystem auch nicht eine automatisierte Auswertung des Ereignisses. Ebenso erlaubt ein solches Kamerasystem für den Benutzer nicht eine frei Festlegung von ereignisbasierten Regeln für die Betrachtung des Ereignisses oder für die Vermessung von bestimmten Ausprägungen des Ereignisses in Echtzeit.

US 2009/0195643 A1 zeigt ein Verfahren zum Erzeugen eines 3D-Bildes auf Grundlage eines 2D-Bildes. Hierbei wird ein Objekt in dem 2D-Bild ausgewählt und zunächst in einer Speichereinheit als Referenzbild gespeichert. Von dem Referenzbild werden eine Vielzahl von erodierten Schichtbildern erzeugt, die anschließend einer Parallaxenverschiebung unterzogen werden, um horizontal von dem Referenzbild versetzt zu werden.

WO 2003/003720 A1 zeigt ein Verfahren und eine Vorrichtung zur Steuerung und Verarbeitung von Videobildern. Die Vorrichtung umfasst eine Einrichtung zur Bearbeitung von Bildrahmen, die von einer Bilderzeugungsvorrichtung überspielt werden. Das Gerät umfasst auch ein User-Interface, mittels dessen ein Benutzer über verschiedene Fenster-Darstellungen von ihm ausgewählte Bilder anzeigen lassen kann.

US 2010/0238351 A1 offenbart ein Bildverarbeitungsverfahren, mittels dessen aus einem Eingangsbild dynamische Merkmale extrahiert werden, diese extrahierten dynamischen Merkmale sodann mit dynamischen Referenz-Merkmalen in einer Referenz-Merkmal-Datenbank verknüpft werden, und anschließend ein Kameramodell auf Grundlage dieser Verknüpfung erzeugt wird. Hiernach wird eine virtuelle Hinzufügung in das Eingabebild auf Grundlage des Kameramodells gemischt, wobei schließlich ein Bild, das sowohl das Eingabebild als auch die virtuelle Einmischung enthält, ausgegeben wird.

WO 2012/070010 A1 zeigt ein Verfahren zum Erzeugen einer 3D-Darstellung eines Ereignisses, das von einer Videokamera aufgezeichnet wird.

US 2008/0192116 A1 zeigt ein Verfahren zum Erfassen von Objekten in Echtzeit bei Sportereignissen auf einem 3D-Spielfeld, wobei die Bewegungen von Spielern auf dem 3D-Spielfeld erkannt und auf Grundlage dessen eine 3D-Darstellung des Sportereignisses auf dem Rechner eines Benutzers erzeugt wird.

Der Erfindung liegt die Aufgabe zugrunde, ein Verfahren zur Aufnahme und Wiedergabe einer Abfolge von Ereignissen zu schaffen, das eine hohe Genauigkeit bei der Verfolgung von Objekten auf dem Spielfeld bietet, einen Perspektivwechsel bezüglich der angezeigten Bilder zum Beispiel nach den Wunschvorgaben eines Zuschauers ermöglicht und die Ausprägungen des Ereignisses (Position, Orientierung, Geschwindigkeit von Objekten, Gliedmaßen etc.) erfassbar und in einem virtuellen 3D-Raum messbar macht.

Diese Aufgabe wird durch ein Verfahren mit den Merkmalen von Anspruch 1 gelöst. Vorteilhafte Weiterbildungen der Erfindung sind Gegenstand der abhängigen Ansprüche.

Ein erfindungsgemäßes Verfahren eignet sich zur Aufnahme und Wiedergabe einer Abfolge von Ereignissen, nämlich eines Sportereignisses auf einem dreidimensionalen Spielfeld, wie zum Beispiel ein Fußballspiel, und umfasst die Schritte von Anspruch 1.

Der Erfindung liegt die wesentliche Erkenntnis zugrunde, dass einer Erkennung und Verfolgung eines Objektes auf dem Spielfeld stets die Bilddaten von zumindest zwei Kameras zugrunde gelegt werden. Diese Kameras sind miteinander synchronisiert, was bedeutet, dass die Kameras zeitgleich den gleichen Bereich eines Spielfelds aufnehmen bzw. fokussieren. Hierdurch ergeben sich für diese zumindest zwei Kameras sich schneidende Strahlengänge, was dazu führt, dass ein Objekt auf dem Spielfeld in den jeweiligen Pixelmatrices dieser beiden Kameras abgebildet wird, aus unterschiedlichen Perspektiven. Zur Auswertung dieser Bilddaten sind die Kameras an eine jeweils zugeordnete Verarbeitungseinheit mit einer sogenannten "Region-of-Interest" (ROI)-Auswahleinheit, welche algorithmusbasiert die ROIs auswählt, angeschlossen, an die die Bilddaten übertragen werden. Falls in bestimmten Pixeln der Pixelmatrices der Kameras Informationen erkannt werden, die einem Objekt auf dem Spielfeld zugeordnet werden könnte, so werden diese Pixel als relevante Pixel bzw. Bildbereiche markiert und die darin enthaltene Informationen als sogenannte lokale Merkmalsdaten erzeugt. Diese lokalen Merkmalsdaten werden anschließend an eine übergeordnete zentrale Auswerteeinheit weitergeleitet und darin derart zusammengefasst, dass die Informationen von Pixeln von zumindest zwei Kameras, die denselben absoluten Punkte in dem dreidimensionalen Raum des Spielfelds erfassen, miteinander korreliert werden, um im Ergebnis ein sogenanntes Objektteil zu ermitteln. Im Sinne der vorliegenden Erfindung ist unter dem Merkmal "Objektteil" der Teil einer Person oder eines Gegenstands auf dem Spielfeld (Spieler, Fußball, Linienbegrenzung oder dergleichen) oder angrenzend dazu (seitliche Begrenzungsbande, Reservebank, Torrahmen oder dergleichen) zu verstehen.

Ein ermitteltes Objektteil oder eine Mehrzahl von solchen ermittelten Objektteilen dienen anschließend als Grundlage dafür, in einem virtuellen dreidimensionalen (3D-) Raum ein virtuelles dreidimensionales (3d-) Objekt zu konstruieren bzw. zu bilden. Dies bedeutet, dass in dem virtuellen 3D-Raum ein virtuelles Abbild des realen Geschehens auf dem Spielfeld erzeugt wird. Entsprechend kann unter Verwendung einer Vielzahl von solcher Art konstruierten virtuellen 3D-Objekten in dem virtuellen 3D-Raum ein reales Spielgeschehen rekonstruiert werden, das anschließend auf einer Ausgabe - bzw. Anzeigeeinheit dargestellt wird. Im Ergebnis wird somit bei der Durchführung der vorliegenden Erfindung nicht ein Fernsehbild der eingesetzten Kameras, sondern ein virtuelles Abbild unter Verwendung von virtuellen 3D-Objekten in dem virtuellen 3D-Raum zeigt, das in Bezug auf das Spielgeschehen bzw. dem Spielablauf möglichst realitätsgetreu sein kann.

In vorteilhafter Weiterbildung der Erfindung kann die Perspektive, aus der die Anzeige in Schritt j) gemäß Anspruch 1 in dem virtuellen 3D-Raum gezeigt wird, verändert werden, vorzugsweise durch eine individuelle Auswahl eines Betrachters der Anzeige. Dies bedeutet, dass der Betrachter einen beliebigen Punkt in dem virtuellen 3D-Raum auswählen kann, aus dessen Perspektive dann die Anzeige des in Schritt i) gemäß Anspruch 1 rekonstruierten Ereignisses durchgeführt wird. Beispielsweise kann sich somit der Benutzer die Perspektive eines Torwarts oder des Schiedsrichters hineinversetzen, so dass der Benutzer dann das Spielgeschehen in Form einer Bildsequenz der virtuellen 3D-Objekte in dem virtuellen 3D-Raum aus Sicht dieser Personen beobachten kann. Der Betrachterpunkt kann ebenfalls mit der Position und Orientierung eines ausgewählten 3D-Objektes, zum Beispiel dem Kopf und der Blickrichtung eines Spielers, entsprechend dynamisch angepasst werden. Auch Überflüge über das Spielfeld mit einer gleichzeitigen Aufnahme des Spielfeldes lassen sich so dynamisch darstellen.

Die Genauigkeit bezüglich der virtuellen 3D-Objekte, die in dem virtuellen 3D-Raum auf Grundlage der zuvor ermittelten Objektteile konstruiert werden, kann dadurch verbessert werden, dass diese Objektteile zu dreidimensionalen (3D-) Referenz-Objektteilen zugeordnet werden, die in der übergeordneten zentralen Auswerteeinheit gespeichert bzw. hinterlegt sind. Diese gespeicherten 3D-Referenz-Objektteile sind jeweils als Teil von dreidimensionalen (3D-) Referenzobjekten definiert, die gewissermaßen als "Baukasten" für die Konstruktion der virtuellen 3D-Objekte dienen. Durch die Zuordnung der ermittelten Objektteile zu einzelnen 3D-Referenz-Objektteilen erkennt das Verfahren, mit welchen bestimmten 3D-Referenzobjekten schließlich ein virtuelles 3D-Objekt zu konstruieren ist. Die Genauigkeit bei dieser Konstruktion kann weiter dadurch verbessert werden, dass die Position und Lage der 3D-Referenz-Objektteile in dem virtuellen 3D-Raum an die tatsächliche Position und Lage der zuvor ermittelten Objektteile angepasst werden, wobei anschließend ein jeweiliges virtuelles 3D-Objekt anhand der angepassten 3D-Referenz-Objektteile in dem virtuellen 3D-Raum konstruiert wird.

Eine individuelle Anpassung der angezeigten Bildsequenz in dem virtuellen 3D-Raum ist mittels eines Referenz-Datensatzes möglich, der in der übergeordneten zentralen Auswerteeinheit hinterlegt bzw. gespeichert ist. In diesem Referenz-Datensatz sind Informationen bezüglich bestimmter Objektteile gespeichert. Hierzu können die Farbgestaltung und/oder die Musterung eines Spielertrikots und/oder eines Fußballs und/oder die Haar- oder Hautfarbe eines Spielers oder dergleichen gehören. In gleicher Weise können die Informationen des Referenz-Datensatzes auch unterschiedliche Physiognomien von Spielern betreffen, z. B. unterschiedliche Größen von Spielern oder die Unterscheidung nach männlich/weiblich. Im Ergebnis kann die Anzeige der virtuellen 3D-Objekte in Abhängigkeit der Informationen des Referenz-Datensatzes angepasst werden. In diesem Zusammenhang versteht sich, dass das Erscheinungsbild der virtuellen 3D-Objekte in dem virtuellen 3D-Raum auch von dem realen Erscheinungsbild auf dem Spielfeld abweichen kann. Dies bedeutet, dass ausgewählte virtuelle 3D-Objekte, z. B. alle Spieler des gleichen Teams oder alle Bandenteile im Bereich einer Südkurve eines Stadions oder dergleichen, mit einer bestimmten Textur "gemapt" bzw. überzogen werden, in Abhängigkeit einer Vorgabe des Benutzers oder einer Voreinstellung des Programms. Beispielsweise kann in dieser Weise die Trikotgestaltung der Spieler eines bestimmten Teams nach Vorgabe der Informationen des Referenz-Datensatzes verändert werden, wobei wie erläutert eine Abweichung von dem realen Erscheinungsbild möglich ist. Alternativ kann die Textur auch dynamisch aus den originären Pixelwerten der Aufnahmekameras erzeugt werden, um ein reales bzw. naturgetreues Abbild des Spielgeschehens zu erzeugen.

Eine weiter verbesserte Genauigkeit bei der Verfolgung von Objekten auf dem Spielfeld kann durch die Verwendung einer Vielzahl von Kameras erreicht werden, mittels denen die Bilddaten in Schritt a) gemäß Anspruch 1 erzeugt werden. Vorzugsweise werden hierzu drei Kameras und vorzugsweise zumindest sieben oder noch mehr Kameras eingesetzt. Alle diese Kameras sind geeignet mit einer Verarbeitungseinheit zum Übertragen der Bilddaten daran verbunden, wobei diese Verarbeitungseinheiten wiederum an eine übergeordnete zentrale Auswerteeinheit angeschlossen sind.

Nach einer vorteilhaften Weiterbildung der Erfindung kann zumindest ein virtuelles 3D-Objekt nach der Rekonstruktion in Schritt i) gemäß Anspruch 1 bzw. Anspruch 3 dynamisch modifiziert werden. Dies bedeutet, dass auf den Trikots der Spieler zu bestimmten Zeitpunkten Werbung eingeblendet wird, und/oder dass auf den seitlichen Banden am Spielfeldrand wechselnde Werbebanner eingeblendet werden. Diesbezüglich versteht sich, dass bei der Anzeige in Schritt j) gemäß Anspruch 1 bzw. Anspruch 3 die virtuellen 3D-Objekte ausschließlich in der modifizierten Version dargestellt werden. In diesem Zusammenhang darf darauf verwiesen werden, dass die dynamische Modifizierung von ausgewählten virtuellen 3D-Objekten sich insbesondere für eine ausgewählte Gruppe von virtuellen 3D-Objekten geeignet ist, bezüglich der ein inhaltlicher Zusammenhang besteht (z. B. alle Spieler einer gleichen Mannschaft, alle seitlichen Banden vor der Südkurve, etc.).

In vorteilhafter Weiterbildung der Erfindung können für die von den Kameras aufgenommenen Ereignisse auch bestimmte Informationen gemessen werden, die absolute dreidimensionale Raumkoordinaten zumindest eines Objekts bezüglich des dreidimensionalen Spielfeldes betreffen, oder die sich auf Bewegungen bzw. Geschwindigkeiten von ausgewählten Objekten auf dem Spielfeld beziehen, und/oder die Distanzen zwischen zumindest zwei Objekten betreffen. In dieser Weise ist es beispielsweise möglich, die Laufgeschwindigkeit eines Spielers oder die Fluggeschwindigkeit des Fußballs während des Spielgeschehens zu bestimmen, oder die Entfernung einer Mauer beim Strafstoß vom Tor und/oder vom Freistoßpunkt zu bestimmen, oder auch zu detektieren, ob ein vorbestimmter absoluter Raumpunkt für den Fußball bezüglich des 3D-Spielfelds gegeben ist und dabei ggf. der Ball - im Sinne einer Torerkennung - in den Torraum hineingelangt ist und dabei die Torlinienebene vollständig durchquert hat. Die vorstehend erläuterte Messung der bestimmten Informationen erfolgt zweckmäßigerweise auf Grundlage des in Schritt i) gemäß Anspruch 1 bzw. Anspruch 3 im virtuellen 3D-Raum rekonstruierten realen Ereignisses und beruht somit auf einer Berücksichtigung der virtuellen 3D-Objekte in dem virtuellen 3D-Raum.

Das erfindungsgemäße Verfahren eignet sich insbesondere auch für eine dreidimensionale Darstellung von Bildsequenzen in dem virtuellen 3D-Raum, wobei auch 3D-Brillen oder 3D-Ausgabegeräte zum Einsatz kommen können. Bezüglich der Ausgabeeinheit wird darauf verwiesen, dass diese entweder stationär (z. B. Fernsehgerät) oder mobil (z. B. tragbares Fernsehgerät oder Smartphone) sein kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachfolgend anhand von bevorzugten Ausführungsformen in der Zeichnung schematisch dargestellt und wird unter Bezugnahme auf die Zeichnung ausführlich beschrieben.

Es zeigen:
- Fig. 1: eine schematisch vereinfachte Draufsicht auf ein Spielfeld, an dessen Rand eine Mehrzahl von Kameras angeordnet ist, um Bilddaten des Spielfeldes zu erzeugen;
- Fig. 2: eine vereinfachte perspektivische Teilansicht eines Fußballstadions, wobei an einem Randbereich des Stadiondaches eine Mehrzahl von Kameras zur Durchführung des erfindungsgemäßen Verfahrens angeordnet sind;
- Fig. 3: ein symbolisiertes Flussdiagramm zur Erläuterung des Ablaufs eines erfindungsgemäßen Verfahrens nach einer ersten Ausführungsform;
- Fig. 4: eine vereinfachte Prinzipdarstellung zur Erläuterung der Durchführung der Verfahrensschritte a) bis f); und
- Fig. 5: eine vereinfachte Statur eines Fußballspielers, dessen Gliedmaßen bzw. Körperteile als dreidimensionale Referenz-Objektteile definiert sind.

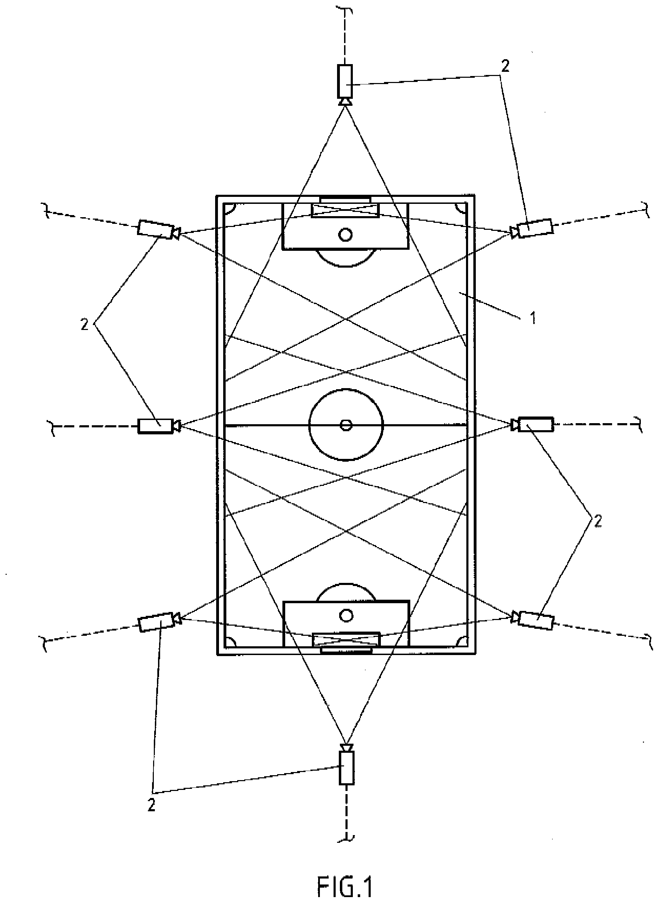

In Fig. 1 ist in einer vereinfachten Draufsicht ein Spielfeld 1 für Fußball dargestellt. Um das Spielfeld 1 herum sind eine Mehrzahl von Kameras 2 angeordnet, mit denen Bilddaten des Spielfeldes 1 erzeugt werden. Jede Kamera 2 erzeugt dabei jeweils eine Pixelmatrix des Spielfeldes oder eines Teiles des Spielfeldes 2. Die Kameras 2 sind vorzugsweise miteinander synchronisiert, was bedeutet, dass zumindest zwei Kameras 2 gleichzeitig den gleichen Bereich des Spielfeldes 1 erfassen. Die Ausrichtung der Kameras 2 ist für das Spielfeld 1 vorzugsweise so gewählt, dass der gesamte Bereich des Spielfeldes 1 von den Kameras 2 lückenlos erfasst wird, ohne dass sich dabei "tote Winkel" bilden.

Es darf darauf hingewiesen werden, dass die Erfindung nicht auf die Aufnahme eines Fußballspiels bzw. das Erzeugen von Bilddaten für ein Fußballfeld 1 eingeschränkt ist, sondern sich in gleicher Weise für jedwede andere Ereignisse eignet, insbesondere für Sportereignisse mit einem Spielverlauf bzw. -geschehen, bei dem ein Spielkörper, z. B. ein Ball (bei Fußball, Hockey, Handball, Volleyball) oder ein Puck (bei Eishockey) zum Einsatz kommen kann.

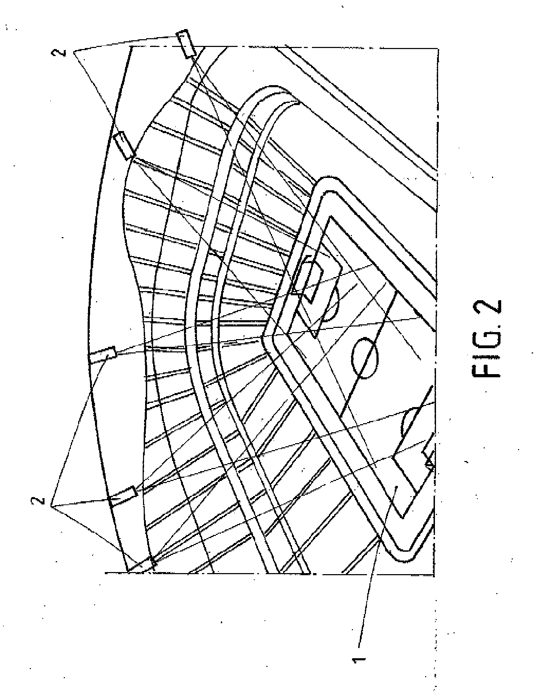

Fig. 2 verdeutlicht in einer vereinfachten Darstellung die mögliche Anbringung von Kameras 2 in einem Fußballstadion. Hierbei sind die Kameras 2 in gleichmäßigen Abständen zueinander an einem Randbereich des Stadiondaches montiert. Dies ermöglicht Bildaufnahmen des Spielfeldes 1 aus Sicht einer jeweiligen Vogelperspektive. Dies hat den Vorteil, dass für die Kameras 2 keine Sichteinschränkungen bestehen und eine gute Übersicht über das Spielfeld 1 gewährleistet ist.

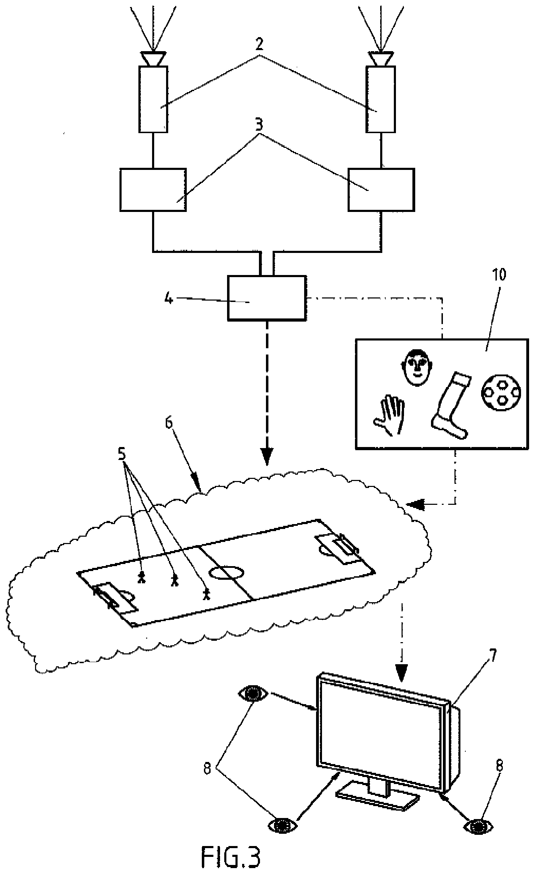

Die Fig. 3 zeigt in vereinfachter Form einen symbolisierten Ablauf des erfindungsgemäßen Verfahrens. Dies ist nachstehend im Einzelnen erläutert. Soweit dabei einzelne Schrittabfolgen mit Buchstaben bezeichnet sind, so entspricht dies den jeweiligen Schritten, die in den Ansprüchen 1 bzw. 3 definiert sind.

Durch zumindest zwei Kameras 2 werden Bilddaten des Spielfeldes 1 erzeugt, wobei jede Kamera jeweils eine Pixelmatrix des Spielfeldes oder zumindest eines Teiles davon erzeugt. Die Kameras 2 sind jeweils mit einer Verarbeitungseinheit 3 verbunden, die jeweils eine (nicht gezeigte und darin integrierte) Region-of-Interest (ROI)-Auswahleinheit aufweist.

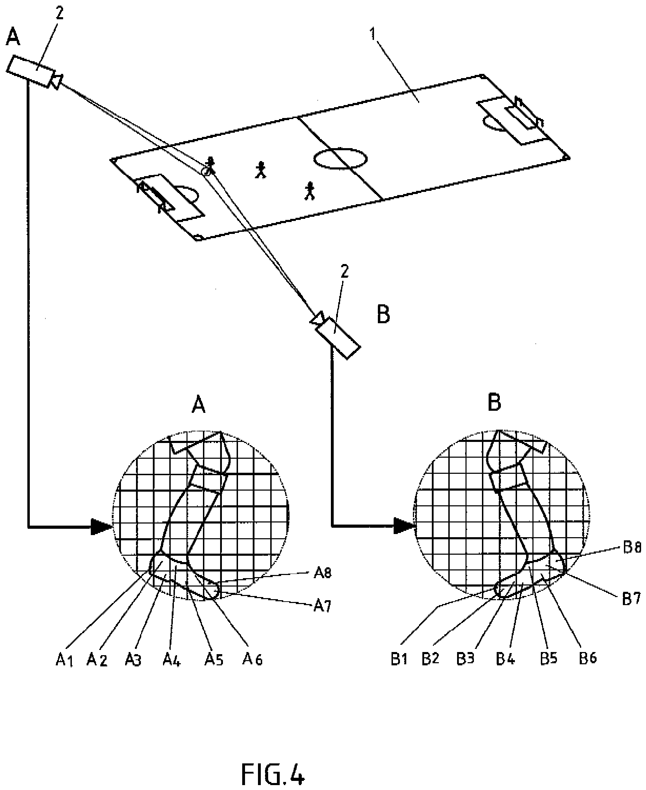

Nachdem die Bilddaten der Kameras 2 an die zugeordnete Verarbeitungseinheit 3 übertragen worden sind, werden durch die ROI-Auswahleinheit relevante Bildbereiche bzw. Pixel der Pixelmatrix einer jeweiligen Kamera 2 ausgewählt. Dies ist nachfolgend noch im Detail anhand der Fig. 4 erläutert. Auf Grundlage der Informationen dieser relevanten Pixel werden dann lokale Merkmalsdaten erzeugt, die anschließend an eine übergeordnete zentrale Auswerteeinheit 4 weitergeleitet werden.

Die anschließende Auswertung der lokalen Merkmalsdaten und eine entsprechende Weiterverarbeitung dieser Daten in der zentralen Auswerteeinheit 4 wird nachstehend im Detail erläutert, teilweise unter Bezugnahme auf die Fig. 4.

Ein Spieler kann von zwei Kameras gleichzeitig aufgenommen werden: in Fig. 4 ist dies durch die Kameras A und B symbolisiert, mit denen Bilddaten des rechten Beins dieses Spielers erzeugt werden. Die Pixeldaten der Kameras A bzw. B sind in Fig. 4 in den vergrößerten Kreisausschnitten vereinfacht dargestellt, die jeweils einen relevanten Bildbereich für die Pixelmatrix der Kamera A bzw. B darstellen.

In der zentralen Auswerteeinheit werden nun lokale Merkmalsdaten von zumindest zwei Kameras zur Ermittlung eines Objektteiles zusammengefasst. Am Beispiel von Fig. 4 wird dies für den Fuß des linken Beins des momentan von den Kameras A und B aufgenommenen Spielers erläutert.

Es versteht sich, dass der linke Fuß des besagten Spielers von Fig. 4 zu einem bestimmten Zeitpunkt sich an einem bestimmten Punkt im 3D-Raum des Spielfeldes befindet. Dieser Zeitpunkt ist in den Pixelmatrices von Fig. 4 gezeigt. In der Pixelmatrix von Kamera A belegt der linke Fuß des Spielers die Pixel A₁-A₈. Die Kamera B ist wie gezeigt in einer anderen Perspektive am Rand des Spielfeldes 1 angedeutet. Entsprechend werden in der Pixelmatrix der Kamera B durch den Fuß des besagten Spielers andere Pixel belegt, beispielsweise im Bild durch die Pixel B₁-B₉ angedeutet. Das Zusammenfassen von lokalen Merkmalsdaten gemäß Schritt e) bedeutet, dass von der übergeordneten zentralen Auswerteeinheit ausgewählte Pixel der relevanten Pixelmatrices der Kameras A bzw. B zusammengefasst werden. Die Bildinformation eines jeden einzelnen Pixels ergibt allenfalls eine Wahrscheinlichkeit dafür, dass hierdurch der Fuß des linken Beins des besagten Spielers dargestellt wird. Falls zum Beispiel die Bildinformationen der Pixel A₁ und B₈ miteinander überlagert bzw. zusammengefasst werden, gibt dies eine zuverlässigere Aussage darüber, dass es sich hierbei um den Fersenbereich des linken Fußes des besagten Spielers handelt. In dieser Weise werden gemäß Schritt f) auch die angrenzenden Bildbereiche der Pixelmatrix ausgewertet, vorliegend also für die Pixel A₂-A₈ und B₁-B₇. Im Ergebnis können dadurch Objektteile ermittelt werden, im vorliegenden Beispiel von Fig. 4 der linke Fuß des besagten Spielers, der von den Kameras A und B momentan aufgenommen wird.

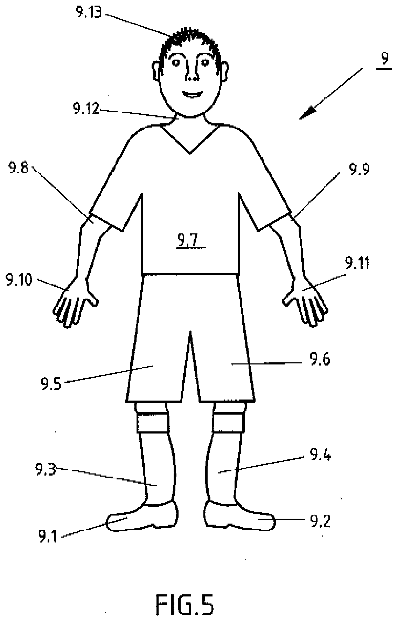

In der zentralen Auswerteeinheit 4 ist eine Objektdatenbank 10 hinterlegt bzw. gespeichert, in der dreidimensionale (3D-) Referenz-Objektteile hinterlegt sind. In Fig. 3 ist dies vereinfacht durch das Symbol mit dem Bezugszeichen 10 dargestellt. Für eine verbesserte Genauigkeit des erfindungsgemäßen Verfahrens werden die ermittelten Objektteile (wie bezüglich Fig. 4 erläutert) bestimmten 3D-Referenz-Objektteilen zugeordnet, die jeweils als Teil von 3D-Referenzobjekten definiert sind. In Fig. 5 ist vereinfacht ein Referenzobjekt 9 in Form eines Fußballspielers gezeigt. Alle wesentlichen Körperteile bzw. Gliedmaßen dieses Spielers 9 sind mit den Ziffern 9.1-9.13 bezeichnet und stellen die vorgenannten 3D-Referenz-Objektteile dar.

Für das Beispiel von Fig. 4 wird nun das Objektteil "Fuß des linken Beins des Spielers" dem Referenz-Objektteil 9.1 des Referenzobjektes in Form des Spielers 9 gemäß Fig. 5 zugeordnet. Des Weiteren wird dann die Position und Lage dieses 3D-Referenz-Objektteiles - im vorliegenden Beispiel das Referenz-Objektteil 9.1 gemäß Fig. 5 - in einem virtuellen 3D-Raum an die Position und Lage des durch die Auswerteeinheit 4 ermittelten Objektteiles angepasst, wobei anschließend ein jeweiliges virtuelles 3D-Objekt anhand der angepassten 3D-Referenz-Objektteile in einem virtuellen 3D-Raum konstruiert wird. Dieser virtuelle 3D-Raum ist in Fig. 3 mit dem Bezugszeichen 6 bezeichnet. Die darin gezeigten Spieler 5 entsprechen nicht etwa den Fernsehbildern der Spieler, die von den Kameras 2 aufgenommen werden, sondern bei diesen Spielern 5 handelt es sich um virtuelle 3D-Objekte in dem virtuellen 3D-Raum 6, die auf Grundlage einer Vielzahl von einzelnen 3D-Referenz-Objektteilen wie vorstehend erläutert konstruiert worden sind.

Eine Menge von konstruierten virtuellen 3D-Objekten 5 in dem virtuellen 3D-Raum 6, wie in Fig. 3 angedeutet, basiert auf dem Schritt h). Im Ergebnis werden in dem virtuellen 3D-Raum 6 alle Objekte (bzw. Spieler und Gegenstände) konstruiert, die tatsächlich auch auf dem Spielfeld 1 anwesend bzw. vorhanden sind. Anschließend werden durch die Auswerteeinheit 4 in Schritt i) die realen Ereignisse in dem virtuellen 3D-Raum rekonstruiert, und anschließend in Schritt j) auf einer Ausgabeeinheit 7 in Form einer Bildsequenz angezeigt.

In Fig. 3 bedeuten die unterschiedlich bezüglich der Ausgabeeinheit 7 positionierten Augen 8 in stark vereinfachter Weise, dass die Perspektive für die Anzeige gemäß Schritt j) in dem virtuellen 3D-Raum 6 verändert werden kann, z. B. durch eine individuelle Vorgabe eines Benutzers. Wie oben bereits erläutert, kann dabei der Benutzer einen beliebigen Punkt in dem virtuellen 3D-Raum festlegen, aus dessen Perspektive der Benutzer dann die Bildsequenz in dem virtuellen 3D-Raum 6 beobachten kann. Beispielsweise kann sich der Benutzer bzw. Beobachter in die Person eines Torhüters oder eines Schiedsrichters, oder in einen sonstigen beliebigen Punkt auf dem Spielfeld, ggf. auch in beliebig gewünschter vertikaler Höhe, hineinversetzen.

Weitere Aspekte für die vorliegende Erfindung zur Aufnahme, Übertragung und Wiedergabe, insbesondere in 3D, von Sportereignissen bzw. von Bildsequenzen von solchen Sportereignissen, sind durch folgende Merkmale gebildet:
- Bildaufnahme der Sportszene mit einer Mehrzahl von synchronisierten Kameras, die um das Spielfeld herum angeordnet sind; und/oder
- Vorverarbeitung der Bilddaten der Kameras in geeigneten Verarbeitungseinheiten in sogenannten ROI's ("Regions-of-Interest"), die durch ROI-Auswahleinheiten der zugehörigen Verarbeitungseinheiten bestimmt werden können; und/oder
- optional: Unterteilung der ROI's in kleinere Bereiche in sogenannte Sub-ROI's; und/oder
- Ermittlung von sogenannten lokalen Merkmalsdaten der ROI's und Sub-ROI's; und/oder
- Weiterleitung der vorverarbeiteten Merkmalsdaten von jeder Kamera an eine übergeordnete zentrale Auswerteeinheit; und/oder
- Zusammenfassung von Merkmalsdaten von zwei oder mehr Kameras zur Ermittlung von gemeinsam erfassten Objektteilen im dreidimensionalen Spielfeldraum, wobei sie sich ein von den zumindest zwei Kameras gemeinsam erfasste Objektteil an einem eindeutigen absoluten Punkt des dreidimensionalen Spielfeldes befindet; und
- Zuordnung der erfassten Objektteile zu Referenz-Objektteilen, die in einer Objektdatenbank hinterlegt bzw. gespeichert sind und die als Teil von dreidimensionalen Referenzobjekten definiert sind; und/oder
- Anpassung der Position und Lage der Referenz-Objektteile zueinander in einem virtuellen dreidimensionalen Objektraum an die Position und Lage der erfassten Objektteile zueinander; und/oder
- Konstruktion eines virtuellen dreidimensionalen Objektes in einem virtuellen dreidimensionalen Raum, nämlich unter Verwendung der zuvor angepassten Referenz-Objektteile; und/oder
- Rekonstruktion der von den Kameras erfassten bzw. aufgenommenen Sportszene bzw. Bildsequenz des Sportereignisses in dem virtuellen dreidimensionalen Raum, nämlich unter Verwendung der zuvor konstruierten dreidimensionalen virtuellen Objekte; und/oder
- Anzeige der rekonstruierten Sportszene bzw. des zuvor rekonstruierten Ereignisses auf einer Ausgabeeinheit, die stationär oder mobil ausgestaltet sein kann und die optional für eine Wiedergabe in 3D geeignet ist; und/oder
- Verwendung von 3D-Brillen oder 3D-Ausgabegeräten zur Wiedergabe der Anzeige des in dem virtuellen dreidimensionalen Raum rekonstruierten Sportereignisses.

Auf Grundlage der obigen Merkmale kann auch ein erfindungsgemäßes System aufgebaut sein, mit den gleichen Vorteilen wie für das erfindungsgemäße Verfahren bereits erläutert.

Die vorliegende Erfindung ermöglicht einem Betrachter bzw. einem Benutzer ein Betrachten eines Sportereignisses "on demand": Dies bedeutet, dass der Benutzer ein reales Sportereignis unter Verwendung der vorliegenden Erfindung auf seine Wunschvorstellungen, z. B. bezüglich einer einstellbaren und frei wählbaren Perspektive bezüglich der Darstellung der Bildsequenzen in dem dreidimensionalen virtuellen Raum oder bezüglich von Werbehinweisen, die auf den Trikots der Spieler und/oder auf den Seitenbanden erscheinen, anpassen kann. Ergänzend kann der Benutzer weitere Informationen bezüglich des Spielgeschehens abrufen, z. B. Laufgeschwindigkeiten von Spielern oder Fluggeschwindigkeiten des Fußballs, zurückgelegte Laufstrecken eines bestimmten Spielers, Abstand einer Mauer vom Freistoßpunkt, oder absolute Position des Fußballs auf dem dreidimensionalen Spielfeld, um auf Grundlage dessen ggf. ein Tor zu erkennen. Schließlich ist es für den Benutzer auch möglich, bestimmte Bildsequenzen, die für den dreidimensionalen virtuellen Raum erzeugt worden sind, auf Wunsch nochmals abspielen zu lassen, um interessante Spielszenen erneut anzuschauen, ggf. auch in Zeitlupe.

## Patentansprüche

1. Verfahren zur Aufnahme und Wiedergabe einer Abfolge von Ereignissen, nämlich eines Sportereignisses auf einem dreidimensionalen Spielfeld (1) wie z.B. ein Fussballspiel, mit den Schritten;
a) fortwährendes Erzeugen von Bilddaten des Spielfeldes (1) mit zumindest zwei oder mehr Kameras (2), wobei jede Kamera (2) jeweils eine Pixelmatrix des Spielfelds (1) oder eines Teils des Spielfeldes (1) erzeugt,
b) Übertragen der Bilddaten der Kameras (2) an zumindest eine Verarbeitungseinheit (3), die eine Region-of-Interest (ROI)-Auswahleinheit aufweist,
c) Auswählen von für eine Verfolgung eines Objektes auf dem Spielfeld (1) relevanten Bildbereichen bzw. Pixeln der Pixelmatrix einer jeweiligen Kamera (2) durch die ROI-Auswahleinheit auf Basis eines Algorithmus, wobei auf Grundlage der Informationen dieser relevanten Pixel lokale Merkmalsdaten für diese Pixel erzeugt werden,
d) Weiterleiten der lokalen Merkmalsdaten von zumindest zwei Kameras (2), insbesondere von allen Kameras (2), an zumindest eine übergeordnete zentrale Auswerteeinheit (4), die anschließend folgende Schritte ausführt:
e) Zusammenfassen von lokalen Merkmalsdaten der zumindest zwei Kameras (2) zur Ermittlung eines Objektteiles, das an einem bestimmten Punkt im dreidimensionalen Raum gemeinsam in jeweils relevanten Pixeln (A₁-A₈; B₁-B₈) dieser Kameras (2) erfasst worden ist,
f) Wiederholen des Schritts e) für lokale Merkmalsdaten in Bildbereichen der Kameras (2), welche Bildbereiche an die relevanten Bildbereiche von Schritt c) angrenzen, zur Ermittlung von weiteren Informationen eines bereits ermittelten Objektteiles,
g) Konstruieren eines virtuellen dreidimensionalen (3D-)Objektes in einem virtuellen dreidimensionalen (3D-)Raum (6) auf Grundlage der in den Schritten e) und f) ermittelten Objektteile, wobei das 3D-Objekt (5) insbesondere realitätsgetreu ist,
h) Wiederholen der Schritte e) bis g) zum Konstruieren von weiteren virtuellen 3D-Objekten (5) in dem virtuellen 3D-Raum (6),
i) Rekonstruktion eines von den Kameras (2) aufgenommenen realen Ereignisses in dem virtuellen 3D-Raum (6) unter Verwendung der in den Schritten g und h) konstruierten virtuellen 3D-Objekte (5), und
j) Anzeige des in Schritt i) rekonstruierten Ereignisses auf einer insbesondere mobilen Ausgabeeinheit (7) in Form einer Bildsequenz,
wobei die Objektteile, die zuvor in den Schritten e) und f) ermittelt worden sind, zu dreidimensionalen (3D-)Referenzobjektteilen (9.1-9.13), die in einer in der Auswerteeinheit (4) gespeicherten Objektdatenbank (10) hinterlegt sind, zugeordnet werden, wobei die 3D-Referenzobjektteile (9.1-9.13) jeweils als Teil von dreidimensionalen (3D-)Referenzobjekten (9) definiert sind, wobei die Position und Lage der 3D-Referenzobjektteile (9.1-9.13) in dem virtuellen 3D-Raum (6) an die Position und Lage der in den Schritten e) und f) ermittelten Objektteile angepasst werden und anschließend ein jeweiliges virtuelles 3D-Objekt (5) anhand der angepassten 3D-Referenzobjektteile (9.1-9.13) in dem virtuellen 3D-Raum (6) konstruiert wird,
**dadurch gekennzeichnet, dass** in der Auswerteeinheit (4) ein Referenz-Datensatz hinterlegt ist, in dem Informationen bezüglich bestimmter Objektteile, wie insbesondere Farbgestaltung und/oder Musterung eines Spielertrikots und/oder eines Fussballs und/oder Haar- oder Hautfarbe eines Spielers, oder bezüglich vorbestimmter Typen von Objektteilen, wie insbesondere unterschiedliche Physiognomien von Spielern, gespeichert sind, wobei die Anzeige der virtuellen 3D-Objekte in Schritt j) in Abhängigkeit der Informationen des Referenz-Datensatzes angepasst wird, wobei auf Grundlage der Informationen des Referenz-Datensatzes (10) eine Textur, wie insbesondere eine Farbgebung oder eine Bemusterung, der virtuellen 3D-Objekte für die Anzeige in Schritt j) angepasst wird.

2. Verfahren nach Anspruch 1, **dadurch gekennzeichnet, dass** eine Perspektive, aus der die Anzeige in Schritt j) in dem virtuellen 3D-Raum (6) gezeigt wird, veränderlich ist, vorzugweise, dass eine Änderung dieser Perspektive (8) zeitgesteuert und/oder nach Vorgabe eines Betrachters der Anzeige erfolgt, vorzugsweise, dass die Anzeige in Schritt j) aus der Perspektive (8) eines beliebigen Punktes in dem virtuellen 3D-Raum (6) möglich ist.

3. Verfahren nach einem der vorhergehenden Ansprüche, **dadurch gekennzeichnet, dass** jede Kamera (2) jeweils mit einer Verarbeitungseinheit (3) verbunden ist, wobei jede Verarbeitungseinheit (3) eine darin integrierte Region of Interest (ROI)-Auswahleinheit aufweist.

4. Verfahren nach einem der vorhergehenden Ansprüche, **dadurch gekennzeichnet, dass** für das Erzeugen von Bilddaten in Schritt a) zumindest drei Kameras (2), vorzugsweise zumindest sieben oder mehr Kameras (2) eingesetzt werden.

5. Verfahren nach einem der vorhergehenden Ansprüche, **dadurch gekennzeichnet, dass** die ROI-Auswahleinheit in eine jeweilige Kamera (2) integriert ist, so dass eine Kamera (2) mit der zugehörigen ROI-Auswerteeinheit (4) über eine gemeinsame Datenleitung mit der zumindest einen zentralen Auswerteeinheit (4) verbunden und über diese Datenleitung von der zentralen Auswerteeinheit (4) angesteuert wird.

6. Verfahren nach einem der vorhergehenden Ansprüche, **dadurch gekennzeichnet, dass** in Schritt c) von der ROI-Auswahleinheit Sub-ROI's (Regions-of-Interest) gebildet werden, die als relevante Bildbereiche bzw. Pixel bestimmt werden.

7. Verfahren nach einem der vorhergehenden Ansprüche, **dadurch gekennzeichnet, dass** zumindest ein virtuelles 3D-Objekt (5) nach der Rekonstruktion in Schritt i) und vor der Anzeige in Schritt j) dynamisch modifiziert wird, vorzugsweise, dass eine ausgewählte Gruppe von virtuellen 3D-Objekten (5), insbesondere eine Mehrzahl von zum gleichen Team gehörenden Spielern und/oder eine Mehrzahl von Banden an einer Seite des Spielfeldrandes, dynamisch modifiziert wird, so dass die Anzeige in Schritt j) diese virtuellen 3D-Objekte ausschließlich in der modifizierten Version darstellt.

8. Verfahren nach einem der vorhergehenden Ansprüche, **dadurch gekennzeichnet, dass** für die Ereignisse, die von den Kameras (2) aufgenommen werden, bestimmte Informationen gemessen werden, insbesondere absolute dreidimensionale Raumkoordinaten eines Objektes bezüglich des Spielfelds (1), Bewegungen bzw. Geschwindigkeiten von ausgewählten Objekten auf dem Spielfeld (1) und/oder Distanzen zwischen zumindest zwei Objekten.

9. Verfahren nach Anspruch 8, **dadurch gekennzeichnet, dass** die Messung der bestimmten Informationen auf Grundlage des in Schritt i) im virtuellen 3D-Raum (6) rekonstruierten realen Ereignisses vorgenommen wird.

10. Verfahren nach einem der vorhergehenden Ansprüche, **dadurch gekennzeichnet, dass** die Anzeige in Schritt j) über eine 3D-Ausgabeeinheit (7) erfolgt, insbesondere 3D-Brillen oder 3D-Fernseher oder dergleichen.

11. Verfahren nach einem der vorhergehenden Ansprüche, **dadurch gekennzeichnet, dass** die Textur für die virtuellen 3D-Objekte bei der Anzeige in Schritt j) dynamisch aus den originären Pixelwerten der Kameras erzeugt wird, so dass die angezeigten virtuellen 3D-Objekte im Wesentlichen dem Erscheinungsbild der realen Objekte entsprechen.

## Claims

1. A method for recording and playing back a sequence of events, namely a sporting event on a three-dimensional playing field (1) such as, for example, a soccer match, with the following steps:
a) continuous generation of image data of the playing field (1) with at least two or more cameras (2), wherein each camera (2) each generates a pixel matrix of the playing field (1) or part of the playing field (1),
b) transmission of the image data of the cameras (2) to at least one processing unit (3) having a Region-of-Interest (ROI) sampling unit,
c) selection of image regions and/or pixels of the pixel matrix of a respective camera (2) relevant for tracking of an object on the playing field (1) by the ROI sampling unit on the basis of an algorithm, wherein on the basis of information of said relevant pixels local feature data for said pixels are generated.
d) relaying the local feature data of at least two cameras (2), in particular of all cameras (2), to at least one higher-level central evaluating unit (4) which subsequently performs the following steps:
e) combination of local feature data of the at least two cameras (2) for determination of an object part which has been jointly captured at a specific point in the three-dimensional space in relevant pixels (A₁-A₈; B₁-B₈) of said cameras (2),
f) repetition of step e) for local feature data in image regions of the cameras (2), which image regions adjoin relevant image regions of step c), for obtaining further information of an object part already determined,
g) construction of a virtual three-dimensional (3D) object in a virtual three-dimensional (3D) space on the basis of the object parts determined in steps e) and f), wherein the 3D object (5) is in particular realistic,
h) repetition of steps e) to g) for constructing further virtual 3D objects (5) in the virtual 3D space (6),
i) reconstruction of a real event recorded by the cameras (2) in the virtual 3D space (6) by using the virtual 3D objects (5) constructed in steps g) and h), and
j) display of the event reconstructed in step i) on an in particular mobile output unit (7) in the form of an image sequence,
wherein the object parts, which have been previously determined in steps e) and f), are allocated to three-dimensional (3D) reference object parts (9.1-9.13), which are stored in an object database (10) stored in the evaluating unit (4), wherein the 3D reference object parts (9.1-9.13) are each defined as a part of three-dimensional (3D) reference objects, wherein the position and location of the 3D reference object parts (9.1-9.13) in the virtual 3D space (6) are adapted to the position and location of the object parts determined in steps e) and f), and subsequently a respective virtual 3D object (5) is constructed by means of the adapted 3D reference object parts (9.1-9.13) in the virtual 3D space (6),
**characterised in**
**that** in the evaluating unit (4) a reference dataset is stored in which information regarding specific object parts, such as in particular color design and/or pattern of a player's jersey and /or a soccer ball and/or hair or skin color of a player, or regarding predetermined types of object parts, such as in particular different physiognomies of players, are stored, wherein the display of the virtual 3D objects in step j) is adapted depending on the information of the reference dataset, wherein on the basis of the information of the reference dataset (10) a texture, such as in particular a color scheme or a sampling of the of the virtual 3D objects, is adapted for the display in step j).

2. The method according to claim 1, **characterized in that** a perspective from which the display in step j) is shown in the virtual 3D space (6), is variable, preferably, that a variation of said perspective (8) occurs in a time-controlled manner and/or according to specification of a viewer of the display, preferably that the display in step j) is possible from the perspective (8) of any point in the virtual 3D space (6).

3. The method according to any one of the preceding claims, **characterized in that** each camera (2) is connected with a processing unit (3), wherein each processing unit (3) comprises an integrated ROI sampling unit.

4. The method according to any one of the preceding claims, **characterized in that** for the generation of image data in step a) at least three cameras (2), preferably at least seven or more cameras (2) are used.

5. The method according to any one of the preceding claims, **characterized in that** a respective camera (2) is integrated into the ROI sampling unit, so that a camera (2) with the associated ROI evaluating unit (4) via a common data line is connected with the at least one central evaluating unit (4), and via said data line is controlled by the central evaluating unit (4).

6. The method according to any one of the preceding claims, **characterized in that** in step c) sub ROIs (Regions-of-Interest) are formed by the ROI evaluating unit which are determined as relevant image regions and/or pixels.

7. The method according to any one of the preceding claims, **characterized in that** at least one virtual 3D object (5) after reconstruction in step i) and prior to display in step j) is dynamically modified, preferably that a selected group of virtual 3D objects (5), in particular a plurality of players belonging to the same team and/or a plurality of advertising boards on one side of the sidelines of the playing field is dynamically modified so that the display in step j) displays said virtual 3D objects exclusively in the modified version.

8. The method according to any one of the preceding claims, **characterized in that** for the events, which are recorded by the cameras (2), specific information is measured, in particular absolute three-dimensional space coordinates of an object with respect to the playing field (1), movements and/or speeds of selected objects on the playing field (1) and/or distances between at least two objects.

9. The method according to claim 8, **characterized in that** the measurement of the specific information is made on the basis of the real event reconstructed in the virtual 3D space (6) in step i).

10. The method according to any one of the preceding claims, **characterized in that** the display in step j) is made via a 3D output unit (7), in particular 3D glasses or 3D television or the like.

11. The method according to any one of the preceding claims, **characterized in that** the texture for the virtual 3D objects for display in step j) is generated dynamically from the original pixel values so that the virtual 3D objects displayed substantially correspond to the appearance of the real objects.

## Revendications

1. Procédé d'enregistrement et de reproduction d'une suite d'événements, à savoir d'un événement sportif sur un terrain de jeu en trois dimensions (1) tel que, par ex. un jeu de football, avec les étapes suivantes:
a) produire en continu des données d'image du terrain de jeu (1) avec au moins deux ou plusieurs caméras (2), chaque caméra (2) générant une matrice de pixels du terrain de jeu (1) ou une partie du terrain de jeu (1),
b) transmettre des données d'image des caméras (2) à au moins une unité de traitement (3) comportant une unité de sélection de zone d'intérêt,
c) sélectionner des zones d'image et/ou des pixels de la matrice de pixels pertinents pour le suivi d'un objet sur le terrain de jeu (1) d'une caméra (2) correspondante par l'unité de sélection de zone d'intérêt sur la base d'un algorithme, des données caractéristiques locales pour desdits pixels étant produites sur la base des informations desdits pixels pertinents,
d) relayer les données caractéristiques locales d'au moins deux caméras (2), surtout de toutes les caméras (2) à au moins une unité d'analyse (4) centrale supérieure qui ensuite réalise les étapes suivantes:
e) réunir des données caractéristiques locales des au moins deux caméras (2) pour déterminer une partie d'objet qui a été capturé conjointement dans des pixels pertinents (A₁-A₈; B₁-B₈) desdites caméras (2),
f) répéter l'étape e) pour des données caractéristiques locales dans des zones d'image des caméras (2) qui sont adjacentes aux zones d'image pertinentes de l'étape c) pour déterminer des informations supplémentaires d'une partie d'objet déjà déterminée,
g) construite un objet virtuel en 3D dans un espace virtuel en 3D (6) sur la base des parties d'objet déterminées dans les étapes e) et f), l'objet virtuel en 3D (5) étant surtout réaliste,
h) répéter les étapes e) à g) pour construire des objets virtuels en 3D (5) supplémentaires dans l'espace virtuel en 3D (6),
i) reconstruire d'un événement réel enregistré par les caméras (2) dans l'espace virtuel en 3D (6) en utilisant des objets virtuels en 3D (5) construits dans les étapes g) et h), et
j) afficher l'événement reconstruit dans l'étape i) sur une unité de sortie surtout mobile (7) sous forme d'une séquence d'images,
les parties d'objet déterminées préalablement dans les étapes e) et f) étant attribués aux parties d'objet de référence en 3D (9.1-9.13) qui sont déposés dans une base de données d'objets (10) stockée dans l'unité d'analyse (4), les parties d'objet de référence en 3D (9.1-9.13) étant chacune définie comme faisant partie des objets de référence en 3D (9), la position et l'emplacement des parties d'objet de référence en 3D (9.1-9.13) dans l'espace virtuel en 3D (6) étant ajusté à la position et l'emplacement des parties d'objet déterminées dans les étapes e) et f), et ensuite un objet virtuel en 3D (5) correspondant étant construit au moyen des parties d'objet de référence en 3D ajustées (9.1-9.13) dans l'espace virtuel en 3D (6),
**caractérisé en ce**
**que** dans l'unité d'analyse (4) un ensemble de données de référence est déposé dans lequel des informations concernant des parties d'objet spécifiques comme surtout le choix de couleurs et/ou le dessin d'un maillot de joueur et/ou d'un ballon et/ou la couleur de cheveux ou de la peau d'un joueur, ou concernant des types prédéterminés des parties d'objet comme surtout des physionomies différentes des joueurs sont stockées, l'affichage des objets virtuels en 3D dans l'étape j) étant adapté en fonction des informations de l'ensemble de données de référence, sur la base des informations de l'ensemble de données de référence (10) une texture comme surtout une coloration ou un échantillonnage des objets virtuels en 3D étant adapté pour l'affichage dans l'étape j).

2. Procédé selon la revendication 1, **caractérisé en ce qu'**une perspective depuis l'affichage dans l'étape j) est montré dans l'espace virtuel en 3D (6) est variable, de préférence, qu'une variabilité de cette perspective (8) est temporisée et/ou est réalisée sur indication d'un observateur de l'affichage, de préférence, que l'affichage dans l'étape j) est possible depuis la perspective (8) d'un point quelconque dans l'espace virtuel en 3D (6).

3. Procédé selon l'une quelconque des revendications précédentes, **caractérisé en ce que** chaque caméra (2) est liée à une unité de traitement (3), chaque unité de traitement (3) comportant une unité de sélection de zone d'intérêt incorporée.

4. Procédé selon l'une quelconque des revendications précédentes, **caractérisé en ce que** pour la génération des données d'image dans l'étape a) au moins trois caméras (2), de préférence au moins sept ou plusieurs caméras (2) sont utilisées.

5. Procédé selon l'une quelconque des revendications précédentes, **caractérisé en ce que** l'unité de sélection de zone d'intérêt est intégrée dans une caméra (2) correspondante de sorte que une caméra (2) avec l'unité d'analyse associée (4) à travers une ligne commune de données est liée avec l'au moins une unité d'analyse centrale (4) et est commandée à travers cette ligne de données par l'unité d'analyse centrale (4).

6. Procédé selon l'une quelconque des revendications précédentes, **caractérisé en ce que** dans l'étape c) des sous-unités de sélection de zone d'intérêt sont formées par l'unité de sélection de zone d'intérêt qui sont déterminées en tant que zones d'image et/ou pixels pertinents.

7. Procédé selon l'une quelconque des revendications précédentes, **caractérisé en ce qu'**au moins un objet virtuel en 3D (5) après la reconstruction dans l'étape i) et avant l'affichage dans l'étape j) est modifié dynamiquement, de préférence, qu'un groupe sélectionné des objets virtuels en 3D (5), surtout une pluralité de joueurs faisant partie de la même équipe et/ou une pluralité de panneaux publicitaires sur un côté de la ligne de touche du terrain de jeu est modifiée dynamiquement de sorte que l'affichage dans l'étape j) montre ces objets virtuels en 3D (5) seulement dans la version modifiée.

8. Procédé selon l'une quelconque des revendications précédentes, **caractérisé en ce que** pour les événements qui sont enregistrés par les caméras (2), certaines informations sont mesurées, surtout des coordonnées spatiales absolues en 3D d'un objet concernant le terrain de jeu (1), des mouvements et/ou des vitesses des objets sélectionnés sur le terrain de jeu (1) et/ou des distances entre au moins deux objets.

9. Procédé selon la revendication 8, **caractérisé en ce que** la mesure de certaines informations est réalisée sur la base de l'événement réel reconstruit dans l'étape i) dans l'espace virtuel en 3D (6).

10. Procédé selon l'une quelconque des revendications précédentes, **caractérisé en ce que** l'affichage dans l'étape j) est réalisé au moyen d'une unité de sortie en 3D (7), surtout des lunettes en 3D ou des télévisions en 3D ou similaire.

11. Procédé selon l'une quelconque des revendications précédentes, **caractérisé en ce que** la texture pour les objets virtuels en 3D (5) lors de l'affichage dans l'étape j) est générée dynamiquement à partir des valeurs de pixels originales des caméras de sorte que les objets virtuels en 3D affichés correspondent sensiblement à l'apparence des objets réels.
